(19) Europäisches Patentamt / European Patent Office / Office européen des brevets

(11) EP 2 532 700 A1

# (12) EUROPEAN PATENT APPLICATION

(43) Date of publication:
**12.12.2012 Bulletin 2012/50**

(51) Int Cl.:
***C08G 75/23*** *(2006.01)* ***H01M 8/10*** *(2006.01)*

(21) Application number: **11004590.3**

(22) Date of filing: **06.06.2011**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Max-Planck-Gesellschaft zur Förderung der Wissenschaften e.V.**
**80539 München (DE)**

(72) Inventors:
- **Titvinidze, Giorgi**
  **55122 Mainz (DE)**
- **Meyer, Wolfgang H.**
  **55129 Mainz (DE)**
- **Manhart, Angelika**
  **55444 Schöneberg (DE)**

(74) Representative: **Katzameyer, Michael**
**v. Bezold & Partner**
**Patentanwälte**
**Akademiestrasse 7**
**80799 München (DE)**

## (54) Novel block copolymers comprising sulfonated poly(sulfones) with high ion-exchange capacity, high ion-conductivity and high stability

(57) The present invention relates to block copolymers comprising sulfonated poly(sulfones), membranes comprising said copolymers and methods for preparing said copolymers and membranes.

The block copolymer of the invention comprises
a) at least one hydrophilic block consisting of a fully sulfonated poly(arylene sulfone) of the following formula $-[-SO_2-Ar_1(SO_3M)_o-]_n-SO_2-$ (**I**),
b) at least one hydrophobic block consisting of a poly (arylene sulfone) of the following formula $-O-[(Ar_2-X)_a-(Ar_3-Y)_b-(Ar_4-Z)_c-(Ar_5-O)_d-]_m$ (**II**), wherein X = -, $C(CF_3)_2$, $C(CH_3)_2$, O, C=O or $SO_2$; Y and Z are O or $SO_2$, with the proviso that at least one of Y and Z is $SO_2$; a, b, c and d are 0 or 1, with the proviso that at least 2 of a, b, c and d are 1;
wherein the at least one hydrophilic block and the at least one hydrophobic block are coupled via a coupling molecule of the following formula $Ar_6-D-(As)_p-E-(Ar_7)_q$ (**III**), wherein $Ar_6$ has at least 4 halogen substituents, preferably fluorine substituents, As represents an aromatic or heteroaromatic ring system with 5-18 ring atoms, including $As_1-Z_{as}-As_2$, with $As_1$ and $As_2$ representing an aromatic or heteroaromatic ring system with 5-18 ring atoms, preferably phenylene, and $Z_{as}$ = O, $SO_2$, $C(CH_3)_2$, $C(CH_3)(CF_3)$ or $C(CF_3)_2$, p and q are 0 or 1, D may be O or $SO_2$ if p is 1 or an end-group such as $CH(CH_3)_2$ or $CF(CF_3)_2$ if p and q are 0, E may be O or $SO_2$ if q is 1 or an end-group such as $CH(CH_3)_2$ or $CF(CF_3)_2$ if q is 0.



Printed by Jouve, 75001 PARIS (FR)

## Description

### Background of the Invention

Polymer electrolyte membranes (PEM) are key components of fuel cells which are regarded as environmentally friendly and highly efficient power converters. The state-of-the-art PEMs are perfluorosulfonic acid (PFSA) ionomers such as Nafion®. However, PFSAs have severe drawbacks, such as high costs, limited operating temperature (80°C) and stability, and severe methanol crossover. To overcome these drawbacks, in recent years a number of alternative membranes have been developed, among which are sulfonated aromatic polymers as most promising candidates due to their commercial availability and processability (Hickner et al., Chem Rev. 104 (2004), 4587). Since polyelectrolytes based on random copolymers showed insufficient conductivity and low mechanical stability at low relative humidity (RH), a major research interest focused on hydrophilic-hydrophobic multiblock copolymers. These are principally able to self-organize into phase-separated nanostructures which allow for high ion-conductivity in the hydrophilic domains and optimal membrane properties based on the hydrophobic domains. Recently, such block copolymers have been reported (Ghassemi, McGrath and Zawodzinski, Polymer 47 (2006), 4132-4239, WO 2005/053060 A2; A. Roy, X. Yu, S.Dunn, J.E. McGrath: J. Membrane Sci. 2009, 327, 118-124; Elabd and Hickner, Macromolecules 2011, 44, 1-11; EP 2 289 973 A1). The block copolymers of the prior art, however, still suffer from some drawbacks with respect to one or more of their properties.

For example, the block copolymers disclosed by Ghassemi et al. comprise perfluorinated hydrophobic blocks which is undesirable under aspects of environmental concern as well as processability. The block copolymers disclosed by Roy et al. contain octafluoro biphenyl as constitutional units of the hydrophobic blocks, which makes them rather expensive due to the monomer costs and highly fluorine containing.

Also, the hydrophilic blocks used therein are based on arylether sulfone structures wherein the sulfonic acid groups are bound less stable than in pure arylsulfone structures.

The membrane materials described by Elabd and Hickner, above, show rather high permeabilities for methanol which is a problem for use in fuel cells.

EP 2 289 973 A1 discloses block copolymers having hydrophilic and hydrophobic segments which are based on arylether or arylthioether ketones and sulfones. Due to this specific structure, the sulfonic acid groups are rather susceptible to cleavage and a complete phase separation of hydrophilic and hydrophobic blocks is difficult or impossible to achieve without using perfluorinated hydrophobic blocks.

In view of this prior art, the object of the present invention is to provide improved block copolymers with high ion-exchange capacity, high ion-conductivity as well as high stability that may be used advantageously, particularly for membrane and fuel cell technologies, and can be produced in a cost-effective manner. One particular related object is providing a new method for producing such polymers.

These objects are achieved according to the invention by providing the block copolymers according to Claim 1 and membranes according to claim 10 as well as the method for producing these block copolymers according to claim 12. The subject of further claims are specific embodiments and other aspects of the invention.

### Description of the Invention

The present invention provides a high molecular weight block copolymer comprising

a) at least one hydrophilic block consisting of a fully sulfonated poly(arylene sulfone) of the following formula $-[-SO_2-Ar_1(SO_3M)_o-]_n-SO_2-$ (**I**), wherein n is an integer from 10 to 100, $Ar_1$ represents an aromatic or heteroaromatic ring system with 5-18 ring atoms, M represents a monovalent cation, o means an integer between from 1 to 4, and wherein $Ar_1$, M und o can be identical or different in various blocks, independently of each other,

b) at least one hydrophobic block consisting of a poly(arylene sulfone) of the following formula $-O-[(Ar_2-X)_a-(Ar_3-Y)_b-(Ar_4-Z)_c-(Ar_5-O)_d-]_m$ (**II**), wherein m is an integer from 10 to 100, and wherein $Ar_2$, $Ar_3$, $Ar_4$ and $Ar_5$ represent an aromatic or heteroaromatic ring system with 5-18 ring atoms which is not substituted by a $(SO_3M)$ group and can be identical or different in various blocks, independently of each other; X = -, $C(CF_3)_2$, $C(CH_3)_2$ , O, C=O or $SO_2$; Y and Z are O or $SO_2$, with the proviso that at least one of Y and Z is $SO_2$; a, b, c and d are 0 or 1, with the proviso that at least 2 of a, b, c and d are 1; wherein the at least one hydrophilic block and the at least one hydrophobic block are coupled via a coupling molecule of the following formula: $Ar_6-D-(As)_p-E-(Ar_7)_q$ (**III**), wherein $Ar_6$ and $Ar_7$ may be identical or different and represent an aromatic or heteroaromatic ring system with 5-18 ring atoms, $Ar_6$ has at least 4 halogen substituents, preferably fluorine substituents, As represents an aromatic or heteroaromatic ring system with 5-18 ring atoms, including $As_1-Z_{as}-As_2$, with $As_1$ and $As_2$ representing an aromatic or heteroaromatic ring system with 5-18 ring atoms, preferably phenylene, and $Z_{as}$ = O, $SO_2$, $C(CH_3)_2$, $C(CH_3)$ $(CF_3)$ or $C(CF_3)_2$, p and q are 0 or 1, D may be O or $SO_2$ if p is 1 or an end-group such as $CH(CH_3)_2$ or $CF(CF_3)_2$ if p and q are 0, E

may be O or $SO_2$ if q is 1 or an end-group such as $CH(CH_3)_2$ or $CF(CF_3)_2$ if q is 0.

The present invention provides multiblock copolymers with fully sulfonated hydrophilic blocks obtained from sulfonated monomers and with a specific coupling agent which can contribute to the advantageous properties of the claimed block copolymers.

Compared to aromates substituted by electron-donor groups (activating groups, e.g. sulfide -S- or ether -O-) or electron-donor and electron-acceptor-substituted aromates, the hydrolytic stability of sulfonic acid substituents is notably increased in an electron-acceptor-substituted aromate that does not feature an electron-donor substituent. Such electron-acceptor-substituted aromates and in particular fully sulfonated poly(arylene) sulfones and methods for preparing the same are described in WO 2006/094767 A1. These methods can be advantageously used to prepare the hydrophilic blocks of the block copolymer of the present invention. Thus, hydrophilic blocks with a well defined structure and composition are obtained. WO 2006/094767 A1 also discloses copolymers with hydrophobic components but not the specific block copolymers of the present invention.

Specific examples, without limitation, for the aromatic or heteroaromatic ring systems with 5-18 ring atoms represented by $Ar_1$, $Ar_2$-$Ar_5$, $Ar_6$-$Ar_7$, As, $As_1$ and $As_2$ are phenylene, naphthylene, anthracene, phenanthrene, biphenylene, furan, thiophene, pyrrole, thiazole, triazole, pyridine, imidazole and benzimidazole.

The aromatic or heteroaromatic ring system $Ar_1$ can be substituted with one to four sulfonic acid groupings $-SO_3M$, i.e. in the above formulas, o = 1-4, and for Ar = phenylene, o is preferably 1 or 2, more preferred 1. The counterion M of the sulfonate group is either a proton, i.e. sulfonic acid is present, or a conventional monovalent cation. Typical examples of such a cation are metal ions such as $Li^+$, $Na^+$, $K^+$ and $NR_4^+$, $PR_4^+$, wherein R represents an organic residue, preferably alkyl.

Apart from the sulfonic acid group and the bridge substituents $-SO_2-$ the aromatic or heteroaromatic rings $Ar_1$ can also contain additional non-electron-donor substituents. Some specific examples, without limitation, for such substituents are halogen, e.g. F, Cl, Br, or unsubstituted or substituted alkyl groups, e.g. $-CH_3$, $-CF_3$ or $C_nH_{2n+1}$, where n is an integer from 2 to 20.

The bridge substituents $-SO_2-$ can be present at an aromatic or heteroaromatic ring $Ar_1$ in the para, meta and ortho position, the para position being generally preferred.

Preferably, $Ar_1$ in formula **I** is phenylene.

The hydrophobic blocks of formula **II** may comprise or consist of polysulfones, polyether sulfones, polyketones, polyetherketones or other aromatic polymers. A variety of such polymers are known in the art and can be prepared by known methods. By varying the main chain structure hydrophobic blocks with different hydrophobicities can be obtained as desired and used in the present block copolymers.

The ring systems $Ar_2$-$Ar_5$ of the hydrophobic blocks may contain additional substituents in addition to the bridge substituents, if desired, but no $SO_3M$ group(s). Some specific examples, without limitation, for such substituents are halogen, e.g. F, Cl, Br, or unsubstituted or substituted alkyl groups, e.g. $-CH_3$, $-CF_3$ or $C_nH_{2n+1}$, where n is an integer from 2 to 20.

In a more specific embodiment of the invention, a, b, c and d in formula **II** are 1, Y is O and Z is $SO_2$.

In another specific embodiment, each of $Ar_2$ - $Ar_5$ is phenylene.

According to the present invention, the hydrophilic blocks and hydrophobic blocks are linked by a specific coupling molecule of formula **III** above.

The halogen substituents of $Ar_6$ in formula **III** may be the same or different and selected from F, Cl, Br and I, preferably all halogen substituents are F.

In a specific embodiment of the invention, $Ar_6$ in formula **III** represents phenyl, p and q are 1.

$Ar_7$, As, $As_1$ and $As_2$ may contain additional substituents in addition to the bridge substituents, if desired. Some specific examples, without limitation, for such substituents are halogen, e.g. F, Cl, Br, or unsubstituted or substituted alkyl groups, e.g. $-CH_3$ or $-CF_3$- In a preferred embodiment $Ar_7$ is identical with $Ar_6$.

In a more specific embodiment, the coupling molecule of formula **III** is selected from the group consisting of

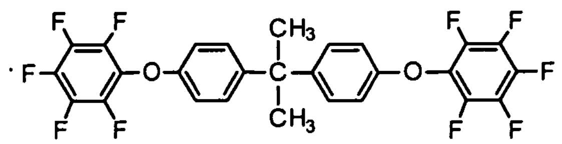

or structurally related compounds wherein the $C(CH_3)_2$ group ($Z_{as}$ in formula III) is replaced by O, $SO_2$, $C(CH_3)$ $(CF_3)$ or $C(CF_3)_2$.

According to a typical embodiment of the present invention, the hydrophilic blocks and the hydrophobic blocks are coupled exclusively or predominantly to the group $Ar_6$ of the coupling molecule in ortho position to each other. As

a consequence of the preferred method for preparing such block copolymers as described below wherein the coupling molecule of formula **III** is coupled first to the hydrophilic block, the ortho position to the $SO_2$ bridge substituent group on the $Ar_6$ ring is highly activated and the subsequent coupling with the hydrophobic block takes place exclusively or predominantly at this position.

In an specific embodiment, the block copolymer has the structure of one of the following formulae or a mixture thereof

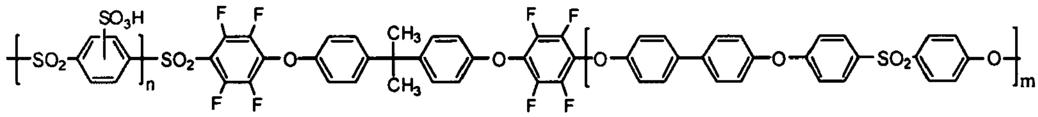

or

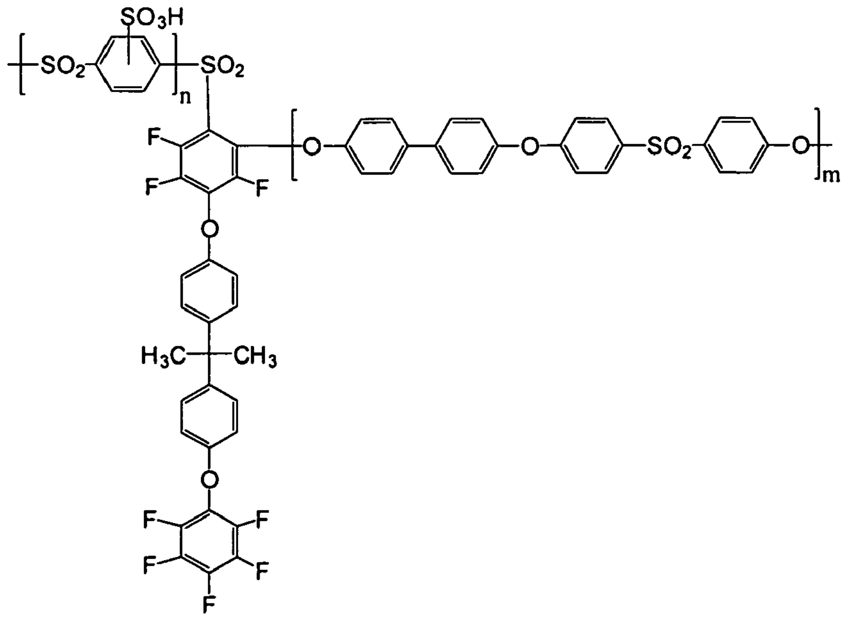

The block copolymers of the invention have molecular weights in the range of 2,000 to 2,000,000, typically in the range of 5,000 to 1,000,000, more frequently in the range of 10,000 to 1,000,000, preferably in the range of 10,000 to 600,000, especially preferably in the range of 20,000 to 400,000.

The block copolymers of the invention can be advantageously used for preparing stable, flexible and typically transparent membranes. Such membranes can be conveniently cast from a solution comprising common solvents. More specifically, the solvent is selected from the group comprising acetone, alcohols, tetrahydrofurane, dimethylformamide, dimethylsulfoxide, dimethylacetamide or mixtures thereof. This method for preparing said membranes represents a further aspect of the invention.

These membranes show a nanophase-separated morphology, which morphology imparts the membranes several desirable properties including an extraordinary high mechanical stability even under conditions of high humidity. Even after storage in liquid water the membranes keep their mechanical strength and their dimensional changes are rather limited. Tapping mode atomic force microscopy (AFM) and transmission electron microscopy (TEM) clearly reveal a hydrophilic hydrophobic phase-separated structure (see Example 2 and Fig. 3)

Summarizing, the novel block copolymers and membranes of the present invention show a number of favorable characteristics:

- the hydrophilic blocks have a very high ion-exchange capacity (IEC), typically at least 4.5 meq/g, resulting in an adjustable high average IEC of the multiblock copolymers (typically between 0.8 and 2.4 meqiv/g) as well
- the block length and block length ratio of hydrophilic to hydrophobic blocks can be controlled and adjusted
- high hydrolytical and thermo-oxidative stability of the hydrophilic blocks
- high mechanical stability even under humid conditions
- low methanol permeability

- high proton conductivity even at low humidity and at temperatures > 100°C.

Membranes and copolymers having such favorable characteristics are particularly well suited for applications in fuel cells, e.g. DMFC fuel cells. However, these materials may also advantageously be used for electrodialysis, Donnan dialysis, electrolysis, for humidification and dehumidification, for ion exchange, or for electromagnetic screening.

In a specific embodiment, the copolymers of the invention can be integrated into an inert porous matrix, such as an organic (porous PE, PP, PVDF, PTFE, etc.) or inorganic matrix (porous boronitride, silica, etc.), or reinforced with fiber materials, such as glass fibers, ceramic fibers, textile fibers, carbon fibers, microporous polypropylene or polytetrafluoroethylene, etc. or fabrics thereof.

Furthermore, the copolymers of the invention can be combined with active or inactive fillers, including, but not limited to, $TiO_2$, $ZrO_2$ or $SiO_2$ particles, zirconium phosphates and phosphonates, tungstic or molybdic acid, etc., to form the corresponding composite materials. A combination with other conventional additives is also easily possible.

A related aspect of the present invention is a favorable method for preparing the above multiblock copolymers.

Generally, such a method comprises

a) providing at least one hydrophobic block with terminal OH-groups having the following formula $HO-[(Ar_2-X)_a-(Ar_3-Y)_b-(Ar_4-Z)_c-(Ar_5-O)_d]_m-T-OH$ (**IIa**), with $Ar_2$ - $Ar_5$, a - d, X, Y, and Z as defined above, T being the structural element $-(Ar_2-X)_a-(Ar_3-Y)_b-(Ar_4-Z)_c-(Ar_5-)_d-$ or a fragment thereof which has no terminal group X, Y, Z, and;

b) providing at least one hydrophilic block comprising the structural element $[-SO_2-Ar_1(SO_3M)_o-]_n-SO_2-$, which is end-capped with a coupling molecule of the formula **III** above;

c) coupling the hydrophilic blocks and hydrophobic blocks via reaction of a terminal halogen of the coupling molecule with the terminal OH-group of the hydrophobic blocks.

In a specific embodiment, the hydrophilic blocks are provided by

i) provision of a sulfonated aryl monomer, $Hal-Ar_1(SO_3M)_o-Hal-$, or of several such aryl monomers, with $Ar_1$, M and o as defined above;

ii) polycondensation of the sulfonated aryl monomer or the sulfonated aryl monomers of step i) with an alkali sulfide resulting in the formation of a sulfonated poly(arylene sulfide sulfone);

iii) coupling the product of step ii) with the coupling molecule of formula III above resulting in an sulfonated poly (arylene sulfide sulfone) end-capped with said coupling molecule;

iv) oxidation of the end-capped sulfonated poly(arylene sulfide sulfone) of step iii) into an end-capped fully sulfonated poly(arylene sulfone).

Typically, the coupling of the hydrophilic blocks and hydrophobic blocks in step c) takes place exclusively or predominantly via reaction of a terminal halogen of the coupling molecule which is on the same aromatic ring as the $-SO_2-$ bridging substituent from the hydrophilic block and in ortho position to said $-SO_2-$ bridging substituent. This ortho position is activated due to the presence of the neighboring said $-SO_2-$ bridging substituent.

The following Reaction Scheme I shows the basic steps of the method according to the invention based on the concrete, nonlimiting example of the synthesis of the copolymer of formula IV (detailed description in Example 1).

1. Synthesis of a hydrophobic block

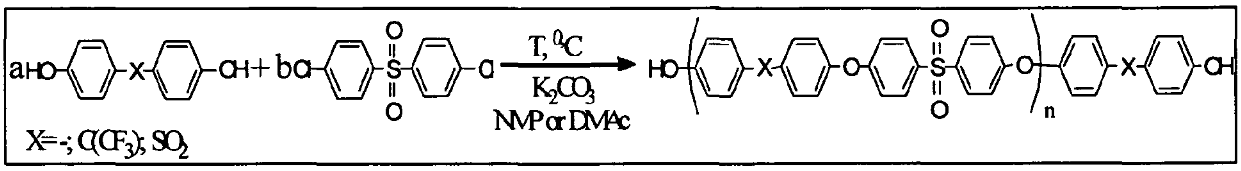


2. Synthesis of a hydrophilic block and end-capping with BPF10

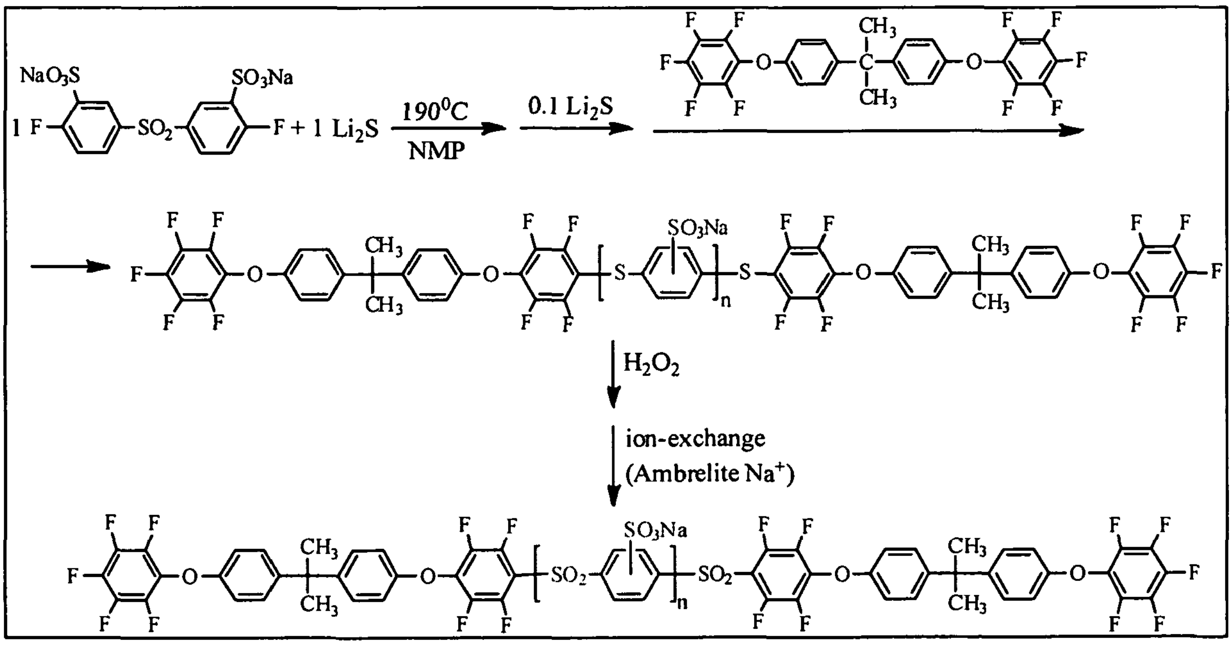


3. Coupling of the hydrophilic and hydrophobic blocks via BPF10 and HO endgroups

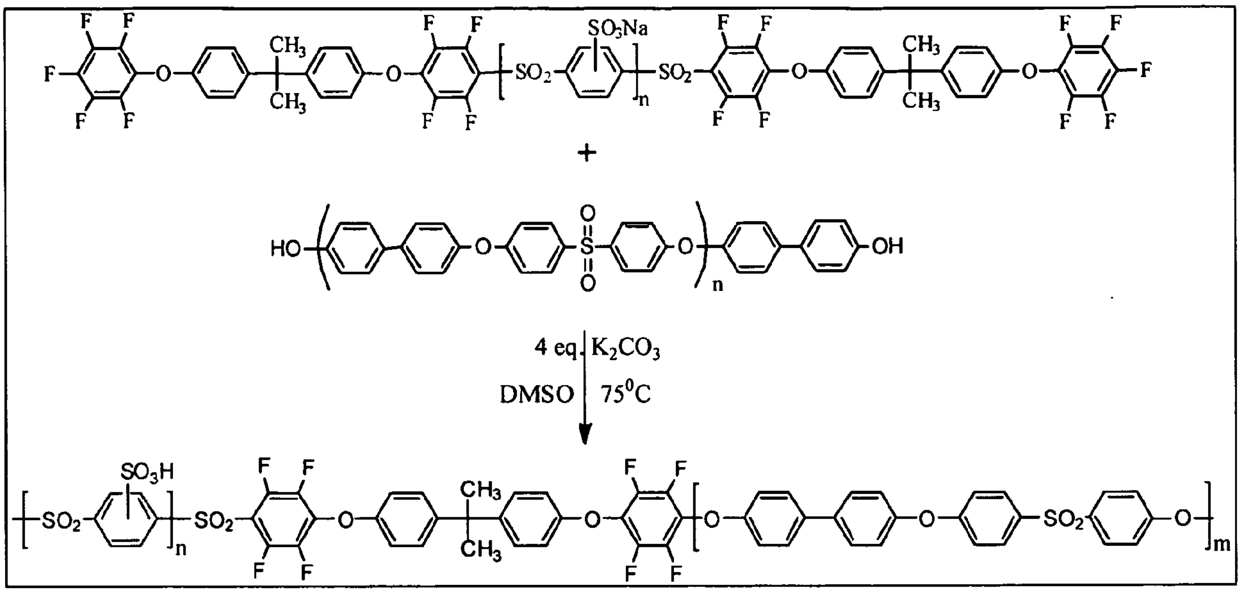


**Reaction Scheme 1**

The block copolymers and membranes of the invention have been characterized by various methods, e.g. by means of AFM, TEM, NMR, solubilities, GPC, IEC through titration, swelling in water and methanol, water absorption isotherms, conductivity measurements, particularly under higher temperatures when wetted, water absorption and hydrolytic stability tests (TGA under 1 atm water vapor) and thermo-oxidative stability (TGA in an oxygen atmosphere, e.g. 80% $N_2$ and 20% $O_2$). Some tests are described in Example 2 and the results thereof shown in figures 1-3.

## Brief Description of Figures

**Fig. 1:**
In figure 1 the temperature dependence of the proton conductivity of one of the multi blockcopolymer membranes (GT 234) is displayed together with that of Nafion 1100 as reference.

**Fig.2:**
In figure 2 the stress versus strain curve at room temperature and 50% relative humidity of one of the multi blockcopolymer membranes (GT 234) is compared to that of Nafion.

**Fig.3:**
In figure 3 the phase separated morphology of one of the multi blockcopolymer membranes (GT 237) is visualized with tapping mode Atomic Force Microscopy.

The following examples are to illustrate the present invention in more detail, without limiting it to these examples.

## EXAMPLE 1

*Synthesis of an exemplary multiblock copolymer of the invention*

### 1. Synthesis of hydrophobic blocks:

**a)** BP (4,4'-biphenol) based poly(arylene ether sulfone)s were synthesized by step growth polycondensation according to the following procedure:

4.00 g (13.93 mmol) 4,4'-dichlorodiphenylsulfone (DCDPS), 2.81 g (15,08 mmol) 4,4'-biphenol (BP) and 2.50 g (18.10 mmol) $K_2CO_3$ were charged into the round-bottomed flask equipped with a Dean Stark trap, condenser, stirrer and gas adapter. Then, 36 ml DMAc and 18 ml toluene were added under argon atmosphere. The reaction mixture was dehydrated at 150°C for 4 hours with refluxing toluene. After removal of toluene, the reaction temperature was slowly increased to 175°C and kept for 48 h. After 48 h, the polymer solution was precipitated in methanol, filtered and washed several times with water. The obtained polymer was dried in vacuum oven at 120°C for 48 h.

By varying of the monomer ratio blocks with varying molecular weights were obtained.

**b)** BHFP (2,2'-bis(4-hydroxyphenyl)hexafluoropropane) based poly(arylene ether sulfone)s were synthesized by step growth polycondensation according to the following procedure:

4.00 g (13.93 mmol) 4,4'-dichlorodiphenylsulfone (DCDPS), 5.07 g (15.09 mmol) 2,2'-bis(4-hydroxyphenyl) hexafluoropropane (BHFP) and 3.13 g (22.64 mmol) $K_2CO_3$ were charged into the round-bottomed flask equipped with a Dean Stark trap, condenser, stirrer and gas adapter. Then, 45 ml NMP and 28 ml toluene were added under argon atmosphere. The reaction mixture was dehydrated at 150°C for 4 hours with refluxing toluene. After removal of toluene, the reaction temperature was slowly increased to 180°C and kept for 14 h. After 14 h, polymer solution was precipitated in methanol, filtered and washed several times with water. The obtained polymer was dried in vacuum oven at 120°C for 48 h. By varying of the monomer ratio blocks with varying molecular weights were obtained.

### 2. Synthesis of coupling agent

2,2-Bis((4-pentafluorophenoxy)benzene)propane (BPF10)
5.00 g (21.90 mmol) Bisphenol A, 12.49 g (54.75 mmol) hexafluorobenzene (HFB), 9.07 g (65.70 mmol) potassium carbonate and 10 ml NMP were charged in a round-bottomed flask equipped with magnetic stirrer. The reaction was conducted at 80°C in a closed system for 24 h. The obtained mixture was purified by column chromatography ($SiO_2$, petrol ether:dichloromethane=5:1 v/v).

### 3. Synthesis of hydrophilic precursor blocks

Fully sulfonated poly(phenylene sulfone)s as hydrophilic blocks were prepared via the following polycondensation reaction:

5.00 g (10.92 mmol) 3,3'-di(sodiumsulfonate)- 4,4'-difluorodiphenyl-sulfone, 0.50 g (10.92 mmol) lithium sulfide and 37 ml anhydrous NMP were charged into the round-bottomed flask under argon atmosphere. The reaction mixture was heated at 190°C for 3 hours in a closed system. Then, the reaction mixture was cooled down to RT and 0.05 g (1,09 mmol) lithium sulfide was added under argon atmosphere and the reaction mixture was heated at 190°C overnight. Afterwards, the reaction mixture was cooled down to RT.

**4. End-capping of hydrophilic precursor blocks with coupling agent**

2.5 g of BPF10 dissolved in 5 ml NMP was added to the reaction mixture of the hydrophilic blocks at RT. Then, the temperature was slowly raised to 80°C and kept overnight. Then the mixture was cooled down, precipitated in i-propanol and filtered. The obtained polymer was dissolved in water in order to remove all by- and low-molecular products and was dialyzed for 24 h against pure water (dialysis tubing cellulose ester membrane, 1.000 MWCO, Spectra/Por Biotech). After dialysis, the water was removed by freeze drying.
By varying of the monomer ratio blocks with varying molecular weights were obtained.

**5. Oxidation of end-capped hydrophilic precursor blocks to end-capped hydrophilic blocks**

5.0 g of the end-capped hydrophilic precursors was suspended in 40 ml glacial acetic acid at 70°C. Hydrogen peroxide (10 ml of 35% $H_2O_2$ in water) was slowly added to the reaction mixture. The reaction was kept at 70°C for 10 h and afterward for 24 h at RT. Afterward acetic acid was distilled off under vacuum and the obtained polymer was dialyzed for 24 h in aqueous solution. After dialysis, ion-exchange was done using ion-exchange resin amberlite IR120 (plus). The water was removed by freeze drying yielding a white polymer.

**6. Coupling of the hydrophilic and hydrophobic blocks via BPF10 and HO endgroups**

The multiblock copolymers were prepared as follows: Before starting the coupling reaction the hydrophilic and hydrophobic oligomers were dried in vacuo at 100°C for at least 24h.
1.80 g (0.244 mmol) of the product from 5.) ($M_n$=7.37 k), 2.02 g (0.244 mmol) of the product from 1b.) ($M_n$=8.3 k) and 0.14 g $K_2CO_3$ (0.976 mmol) were charged into round-bottomed flask equipped with condenser, stirrer and gas adapter. 25 ml DMSO was added into the flask under argon atmosphere. The mixture was heated up to 70°C and kept for 18 h. After the reaction was completed the brown solution was poured into i-propanol to precipitate the multiblock copolymer. The product was washed with water and afterwards with chloroform in order to remove unreacted remains. The reaction yield was 92%.

**7. Membrane preparation**

For the membrane preparation a 10% by weight solution in DMSO of the multi blockcopolymers as decribed in the examples before was used, preferably in the $Na^+$-form of the hydrophilic blocks. This solution was cast onto Teflon plates and dried for at least 48H at 60°C in a vacuum oven. Then the multi blockcopolymer film was pealed off and brought into a 10% by weight aqueous solution of sulfuric acid. The immersed membrane was boiled in the sulfuric acid solution for at least 4 hours, and subsequently boiled in pure water for another 4 hours. Finally the membrane was dialyzed against deionized water for at least 48 hours until no traces of free acid could be detected anymore. The membrane was ready to use in its water swollen state. For drying, the membrane was kept under vacuum at 60°C or higher until constant weight was reached.
Tensile tests were carried out using the Instron Universal Testing Machine (Model 6022) equipped with a 100 N load cell. Stress-strain curves were obtained at a speed of 1.0 mm $min^{-1}$ for dog bone specimens sized 4 $\times$ 20 $mm^2$. The sample was embedded in a homemade chamber in which the RH was adjusted by mixing dry and humidified nitrogen. The mechanical strength of the membranes was evaluated in a tensile test at 25 °C at 40 - 50% RH (which is close to the humidity during fuel cell operation).

**EXAMPLE 2**

*Characterization of exemplary multiblock copolymers and membranes prepared therefrom*

## 1. General Characterization

$^1H$ and $^{13}C$ NMR spectra were recorded using Bruker Spectrospin 250 and Bruker DSX500 spectrometers at room temperature with deuterated dimethyl sulfoxide (DMSO-$d_6$) as a solvent and internal standard.

Molecular weight measurements were done by gel permeation chromatography (GPC) using a Waters 515 system equipped with three consecutive Polymer Standards Service columns (GRAM, 10 000, 1 000, 100) calibrated by standard polystyrene (Polymer Standard Service), UV detector (Soma S-3702) and RI detector (ERC 7512; ERMA). The GPC measurements were performed in DMF at 60°C at a flow rate of 1.0 mL $min^{-1}$.

Thermogravimetric Analysis (TGA) was carried out on a TGA/SDTA-851 (Mettler-Toledo) under nitrogen at a heating rate of 10 K $min^{-1}$ and $T_{d5}$ was reported as temperature at which 5% weight loss was observed. Before analysis, the films were dried in vacuum at 50°C for at least 24 h to remove absorbed water. Differential scanning calorimetry (DSC) was carried out on a Mettler-Toledo DSC-30 under nitrogen at a heating rate of 10 K $min^{-1}$.

The water uptake (WU) and the shrinkage ratio (SR) were obtained by measuring the differences in the weight and length under different humidification. Prior to the measurements the films were thoroughly dried at 100°C for 24 hours and subsequently stored at an atmosphere of fixed relative humidity (RH) until a constant weight was obtained. Different relative humidities were adjusted using different salt solutions. Typically, the water uptake equilibrated within 36-48 h. The WU was calculated according to equation 1:

$$WU\,(\%) = \frac{W_{rh} - W_{dry}}{W_{dry}} \times 100 \quad (1)$$

where $W_{rh}$ is the weight of the membrane at a specific relative humidity and $W_{dry}$ is the weight in the dry state. The hydration number $\lambda$ was calculated on the basis of WU as the number of water molecules per sulfonic acid unit.

The procedure for the determination of the shrinkage ratio SR is similar to the WU measurements. It was calculated according to equation 2.

$$SR\,(\%) = \frac{l_{wet} - l_{rh}}{l_{wet}} \times 100 \quad (2)$$

where $l_{wet}$ is the length of a membrane stored in water and $l_{rh}$ is the length of the membrane at a specific humidification. Together with the length the thickness changes were measured in the same way.

The oxidative stability was investigated by soaking a thoroughly dried membrane sample (10 x 10 x 0.15 mm) with precise weight in Fenton's reagent (30% $H_2O_2$ containing 30 ppm $FeSO_4$) at 25°C. The stability was evaluated by recording the weight loss with time.

## 2. Characterization of proton conductivity

Proton conductivity results were derived from dielectric spectroscopy in a two-electrode geometry using an SI 1260 impedance/gain-phase analyzer and a Novocontrol broadband dielectric converter. Proton conductivities under different humidification (different degree of hydration) were measured in a temperature controlled climate chamber (Binder KBF 240) with a working humidity range between 18 and 95% of relative humidity (RH). Membranes were equilibrated in the climate chamber at the specified RH and temperature for at least 10h before measurement. An atmosphere of saturated humidity was generated by using a closed sample cell with a water reservoir on the bottom that was not in contact with the sample. Saturation was controlled by a Sensirion SHT75 humidity sensor and found to be 100% (within the error bar of the sensor (2%)). From Cole-Cole and Bode plots, the specific conductivity of the composite membrane was determined. Conductivity was measured in through plane as well as in plane geometry. For the in plane measurements membranes of size 10 x 15mm were fixed between two E-tek$^R$ electrodes, for through plane measurements stacks of 8-16 membranes were placed between E-tek$^R$ electrodes and pressed by screws to ensure maximum contact.

Conductivity measurements in pure $H_2O$-atmosphere ($p(H_2O) = 10^5$ Pa) above 100°C were carried out in a

double wall temperature controlled glass oven with a gas inlet and outlet. To constantly flush the sample with a pure $H_2O$-atmosphere, water was evaporated, the gas subsequently adjusted to the desired temperature and piped through the heated inlet of the glass oven. A pressure of $10^5$ Pa adapts itself due to the small outlet of the oven against ambient. The atmosphere set by this equipment is comparable to a fuel cell under operation, where water is formed at the cathode. It should be noted that the relative humidity, set by a $H_2O$-atmosphere at $10^5$ Pa, decreases with increasing temperature according to the table of vapor pressure. For example, $10^5$ Pa water vapor pressure at 120°C corresponds to a relative humidity of ~ 50% (i.e. $2 \cdot 10^5$ Pa = 2 bar are needed for condensation), at 150°C the same water pressure corresponds to a RH close to 20% only.

In figure 1 the temperature dependence of the proton conductivity of one of the multi blockcopolymer membranes (GT 234) is displayed together with that of Nafion 1100 which is taken as state of the art material. Between room temperature and 100 °C the conductivities are presented with $\lambda$, the number of water molecules per sulfonic acid group as parameter, which represents the amount of water uptake and swelling under constant relative humidity (RH) conditions. Above 100°C the conductivities are displayed at a constant water vapor pressure of $10^5$ Pa (which corresponds to decreasing RH conditions with increasing temperature).

### 3. Characterization of membrane mechanical properties

Tensile tests were carried out using the Instron Universal Testing Machine (Model 6022) equipped with a 100 N load cell. Stress strain curves were obtained at a speed of 1.0 mm $min^{-1}$ for dogbone specimens sized 20 x 20mm. The sample was embedded in a chamber in which the relative humidity was adjusted by mixing dry and humidified nitrogen.

In figure 2 the stress versus strain curve at room temperature and 50% relative humidity of one of the multi blockcopolymer membranes (GT 234) is compared to that of Nafion. From the curves, the following data which are characteristic for the mechanical stability of the membranes under humid conditions can be derived:

| Polymers | Stress at break (MPa) | Elongation at break (%) | Young' s modulus (MPa) |
|---|---|---|---|
| GT243 | 19.4 | 56.5 | 235.5 |
| Nafion | 17.2 | 191.1 | 150.4 |

Clearly, the block copolymer membrane is superior to the standard membrane (Nafion).

The mechanical properties of the multiblock copolymer membranes were also determined by Dynamic Mechanical Analysis (DMA). DMA was performed on a Triton DMA analyzer (Tritec 2000) in liquid water at *T*) 30 °C with a maximum elongation of 0.02 mm at a frequency of 1 Hz.

### 4. Characterization of membrane morphology

Tapping mode AFM observations were performed by Dimension 3100 Atomic Force Microscope, using Olympus tapping mode cantilevers OMCL-AC160TS-W2 with a force constant of 42 N/m and resonance frequency of around 300 kHz. All images were taken under ambient conditions (RH = 40 - 50 %).

In figure 3 the phase separated morphology of one of the multi blockcopolymer membranes (GT 237) is visualized with tapping mode Atomic Force Microscopy with a force constant of 42 N/m and resonance frequency of around 300 kHz under ambient conditions (RH = 40 -50%). The width of the image corresponds to 500 nm of the sample, thus, the average domain size is in the order of 25 nm.

The membrane morphology was also probed with transmission electron microscopy (FEI Tecnai F 20) with unstained samples in the EDX mode and with samples which have been stained with soaking in a 1 molar solution of $AgNO_3$ in water for about 4 hours. The samples were prepared as ultrathin films using standard cryo-technique in order to image the bulk morphology of the membranes.

### 5. Characterization of membrane permeability for methanol

The methanol permeability of the multiblock copolymer GT243 was measured using a home-made U-shaped diffusion cell which consists of two compartments with a volume of 22 ml (each), separated by the membrane with a diffusion area of 2.32 $cm^2$ sealed by a screw clamp. The compartment A was filled with a 3 M methanol aqueous solution (a 3 M solution is the typical mixture used for operating a fuel cell) and the other (B) with deionized water. Both reservoirs were stirred with magnetic stirrers. The mixture in compartment A was continuously renewed by pumping in a fresh solution of methanol in water. The concentration of methanol diffused from reservoir A to B across the membrane was

determined using $^1H$ NMR. As the volume changes were insignificant, they were not taken into account in further calculations. The methanol permeability was calculated via the following equation:

$$P = \frac{1}{A}\frac{C_B(t)}{C_A(t-t_0)}V_B L$$

where A is the diffusion area of the membrane, L is membrane thickness, $V_B$ is the volume of the compartment B, $C_A$ and $C_B$ are concentrations of methanol in compartments A and B. $C_B$ is measured several times during the experiment and the concentration change of $C_B$ with time is obtained from the linear slope of the time dependent data. Using the slope value and the above equation, the methanol permeability was found $7{,}5\cdot10^{-7}$ $cm^2/s$ for GT243. For comparison Nafion® as a reference was chosen and methanol permeability was measured using the same technique and a value of $2.1\cdot10^{-6}$ $cm^2/s$ was found.

Thus, the methanol permeability of the block copolymer membrane is only 36% of that of a standard membrane (Nafion).

## Claims

1. A high molecular weight block copolymer comprising

a) at least one hydrophilic block consisting of a fully sulfonated poly(arylene sulfone) of the following formula

$-[-SO_2\text{-}Ar_1(SO_3M)_o\text{-}]_n\text{-}SO_2\text{-}$ , **(I)**

wherein n is an integer from 10 to 100, $Ar_1$ represents an aromatic or heteroaromatic ring system with 5-18 ring atoms, M represents a monovalent cation, o means an integer from 1 to 4, and wherein $Ar_1$, M und o can be identical or different in various blocks, independently of each other,
b) at least one hydrophobic block consisting of a poly(arylene sulfone) of the following formula

$-O-[(Ar_2\text{-}X)_a\text{-}(Ar_3\text{-}Y)_b\text{-}(Ar_4\text{-}Z)_c\text{-}(Ar_5\text{-}O)_d\text{-}]_m$ , **(II)**

wherein m is an integer from 10 to 100, and wherein $Ar_2$, $Ar_3$, $Ar_4$ and $Ar_5$ represent an aromatic or heteroaromatic ring system with 5-18 ring atoms which is not substituted by a ($SO_3M$) group and can be identical or different in various blocks, independently of each other; X = -, $C(CF_3)_2$, $C(CH_3)_2$, O, C=O or $SO_2$; Y and Z are O or $SO_2$, with the proviso that at least one of Y and Z is $SO_2$; a, b, c and d are 0 or 1, with the proviso that at least 2 of a, b, c and d are 1;
wherein the at least one hydrophilic block and the at least one hydrophobic block are coupled via a coupling molecule of the following formula
$Ar_6\text{-}D\text{-}(As)_p\text{-}E\text{-}(Ar_7)_q$ (**III**),
wherein $Ar_6$ and $Ar_7$ may be identical or different and represent an aromatic or heteroaromatic ring system with 5-18 ring atoms, $Ar_6$ has at least 4 halogen substituents, preferably fluorine substituents, As represents an aromatic or heteroaromatic ring system with 5-18 ring atoms, including $As_1\text{-}Z_{as}\text{-}As_2$, with $As_1$ and $As_2$ representing an aromatic or heteroaromatic ring system with 5-18 ring atoms, preferably phenylene, and $Z_{as}$ = O, $SO_2$, $C(CH_3)_2$, $C(CH_3)$ $(CF_3)$ or $C(CF_3)_2$, p and q are 0 or 1, D may be O or $SO_2$ if p is 1 or an end-group such as $CH(CH_3)_2$ or $CF(CF_3)_2$ if p and q are 0, E may be O or $SO_2$ if q is 1 or an end-group such as $CH(CH_3)_2$ or $CF(CF_3)_2$ if q is 0.

2. The block copolymer according to claim 1, wherein a, b, c and d in formula **II** are 1, Y is O and Z is $SO_2$.

3. The block copolymer according to claim 1 or 2, wherein $Ar_1$ is phenylene.

4. The block copolymer according to any one of claims 1-3, wherein each of $Ar_2$ - $Ar_5$ is phenylene.

5. The block copolymer according to any one of claims 1-4, wherein $Ar_6$ represents phenyl, p and q are 1.

6. The block copolymer according to any one of claims 1-5, wherein the coupling molecule of formula **III** is selected

from the group consisting of

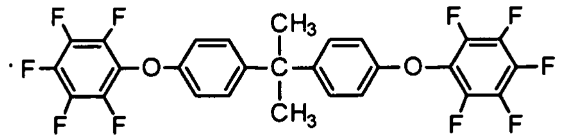

BPF10

or structurally related compounds wherein the $C(CH_3)_2$ group ($Z_{as}$ in formula III) is replaced by O, $SO_2$, $C(CH_3)(CF_3)$ or $C(CF_3)_2$.

**7.** The block copolymer according to any one of claims 1-6, wherein the hydrophilic blocks and the hydrophobic blocks are coupled exclusively or predominantly to the group $Ar_6$ of the coupling molecule in ortho position to each other.

**8.** The block copolymer according to any one of claims 1-7, wherein o is 1.

**9.** The block copolymer according to any one of claims 1-8 which has the following formula **IVa**

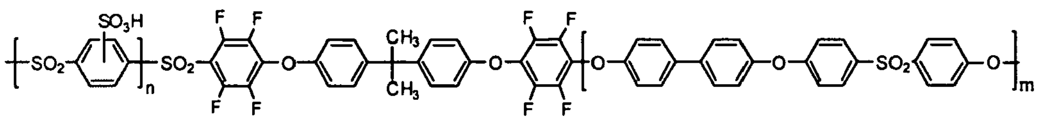

or IVb

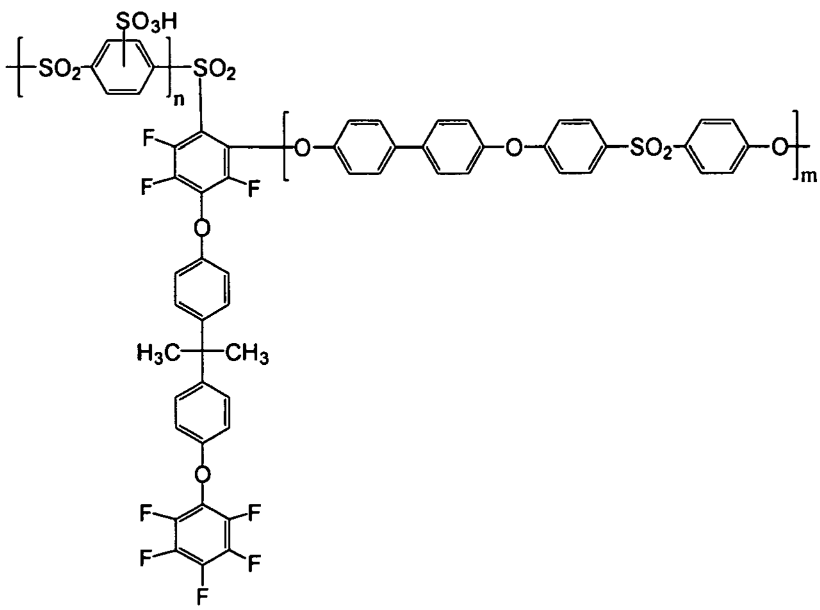

**10.** A membrane comprising the block copolymer according to any one of claims 1-9.

**11.** The membrane according to claim 10 having a hydrophilic-hydrophobic phase-separated morphology.

**12.** A method for preparing the block copolymer according to any one of claims 1-9 comprising

a) providing at least one hydrophobic block with terminal OH-groups having the following formula

HO-[$(Ar_2$-$X)_a$-$(Ar_3$-$Y)_b$-$(Ar_4$-$Z)_c$-$(Ar_5$-$O)_d]_m$-T-OH **(IIa)**, with $Ar_2$ - $Ar_5$, a - d, X, Y, and Z as defined above, T being the structural element -$(Ar_2$-$X)_a$-$(Ar_3$-$Y)_b$-$(Ar_4$-$Z)_c$-$(Ar_5$-$)_d$- or a fragment thereof which has no terminal group X, Y, Z, and;

b) providing at least one hydrophilic block comprising the structural element [-$SO_2$-$Ar_1(SO_3M)_o$-$]_n$-$SO_2$-, which is end-capped with a coupling molecule of the formula **III** above;

c) coupling the hydrophilic blocks and hydrophobic blocks via reaction of a terminal halogen of the coupling molecule with the terminal OH-group of the hydrophobic blocks.

**13.** The method according to claim 12, wherein the hydrophilic blocks are provided by

i) provision of a sulfonated aryl monomer, Hal-$Ar_1(SO_3M)_o$-Hal-, or of several such aryl monomers, with $Ar_1$, M and o as defined above;

ii) polycondensation of the sulfonated aryl monomer or the sulfonated aryl monomers of step i) with an alkali sulfide resulting in the formation of a sulfonated poly(arylene sulfide sulfone);

iii) coupling the product of step ii) with the coupling molecule of formula III above resulting in an sulfonated poly (arylene sulfide sulfone) end-capped with said coupling molecule;

iv) oxidation of the end-capped sulfonated poly(arylene sulfide sulfone) of step iii) into an end-capped fully sulfonated poly(arylene sulfone).

**14.** The method according to claim 12 or 13, wherein the coupling of the hydrophilic blocks and hydrophobic blocks in step c) takes place exclusively or predominantly via reaction of a terminal halogen of the coupling molecule which is on the same aromatic ring as the -$SO_2$- bridging substituent from the hydrophilic block and in ortho position to said -$SO_2$- bridging substituent.

**15.** Use of the block copolymer according to any one of claims 1-9 or of the membrane according to claim 10 or 11 in fuel cells, in particular DMFC fuel cells, for electrodialysis, Donnan dialysis, electrolysis, for humidification and dehumidification, for ion exchange, or for electromagnetic screening.

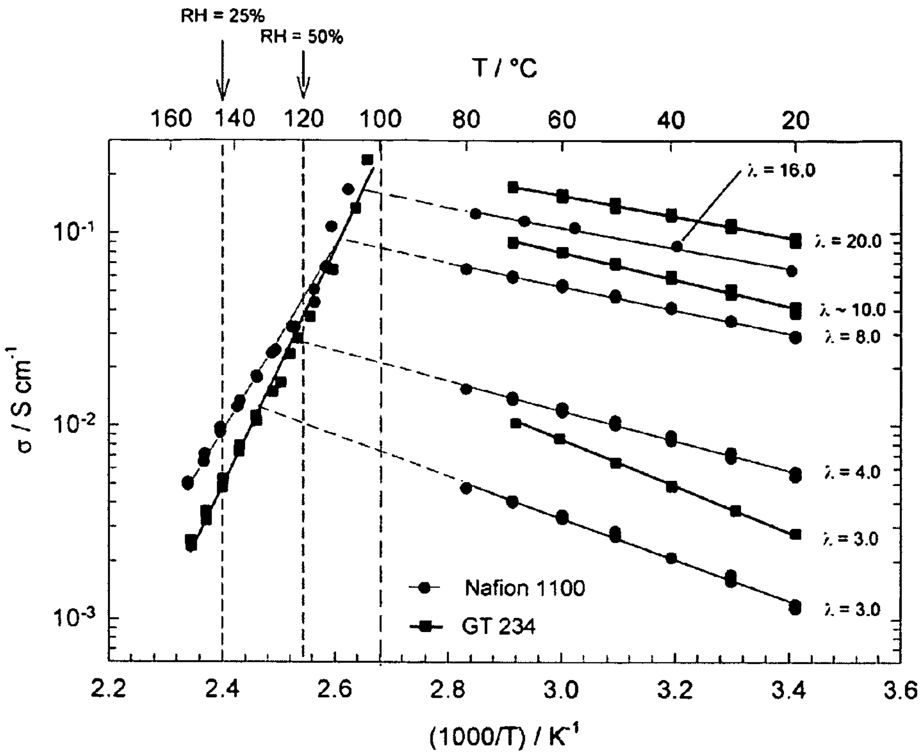
RH = 25%
RH = 50%
T / °C
160 140 120 100 80 60 40 20
λ = 16.0
λ = 20.0
λ ~ 10.0
λ = 8.0
λ = 4.0
λ = 3.0
λ = 3.0
Nafion 1100
GT 234
σ / S cm-1
(1000/T) / K-1

Fig. 1

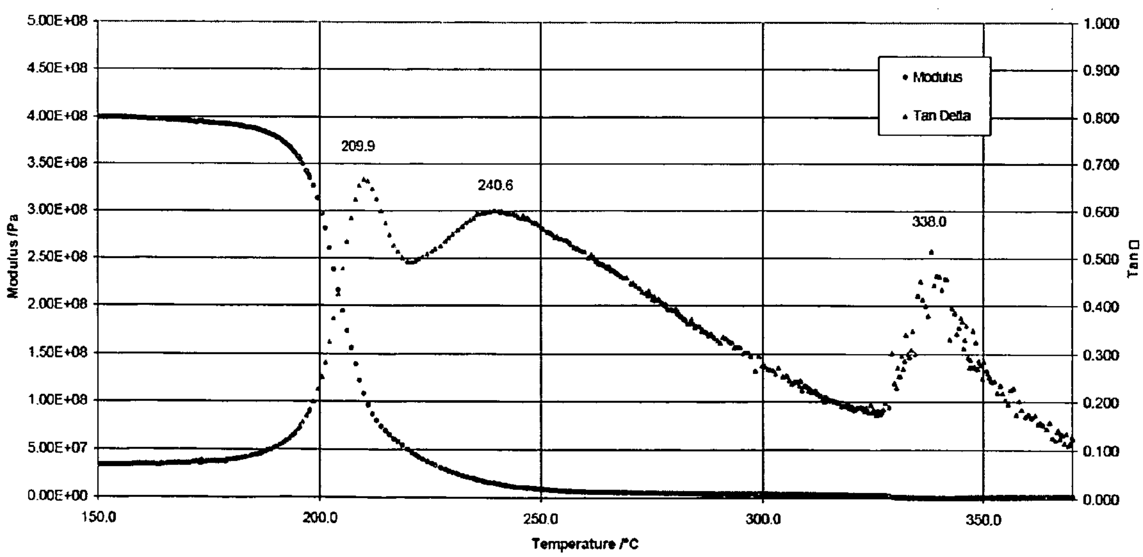
Modulus
Tan Delta
209.9
240.6
338.0
Modulus /Pa
Tan δ
Temperature /°C

Fig. 2

Fig. 3

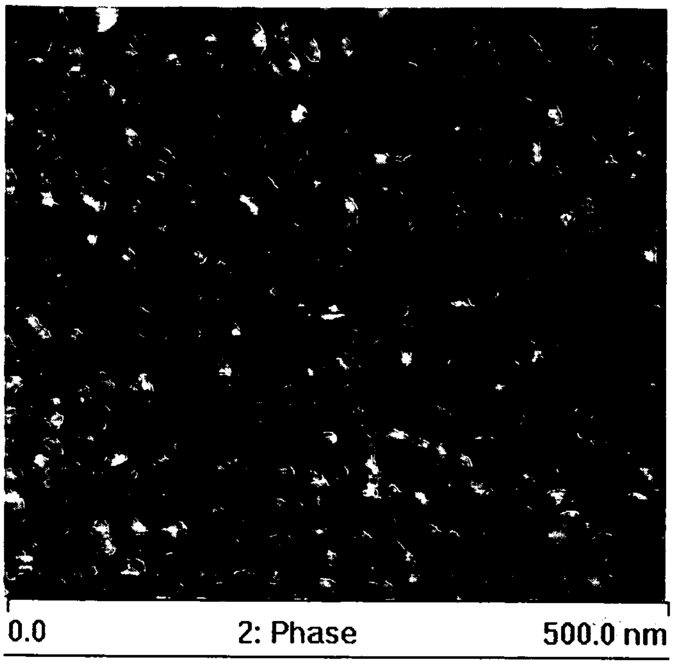

Europäisches Patentamt
European Patent Office
Office européen des brevets

# EUROPEAN SEARCH REPORT

Application Number
EP 11 00 4590

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | WO 2010/146052 A1 (BASF SE [DE]; KHVOROST ALEXANDER [DE]; WEBER MARTIN [DE]; SCHMIDT CHRI) 23 December 2010 (2010-12-23)<br>* the whole document *<br>----- | 1-15 | INV.<br>C08G75/23<br>H01M8/10 |
| A,D | EP 2 289 973 A1 (TOYO BOSEKI [JP])<br>2 March 2011 (2011-03-02)<br>* the whole document *<br>----- | 1-15 | |
| A | WO 2008/005647 A2 (GEN ELECTRIC [US]; BRUNELLE DANIEL JOSEPH [US]; ZHOU HONGYI [US]; LIU) 10 January 2008 (2008-01-10)<br>* the whole document *<br>----- | 1-15 | |
| A,D | WO 2005/053060 A2 (VIRGINIA TECH INTELL PROP [US]; HARRISON WILLIAM [US]; GHASSEMI HOSSEI) 9 June 2005 (2005-06-09)<br>* the whole document *<br>----- | 1-15 | |

TECHNICAL FIELDS SEARCHED (IPC)

C08G
H01M

The present search report has been drawn up for all claims

1

| Place of search | Date of completion of the search | Examiner |
|---|---|---|
| Munich | 25 August 2011 | Jung, Andreas |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
......................................................................
& : member of the same patent family, corresponding document

EPO FORM 1503 03.82 (P04C01)

## ANNEX TO THE EUROPEAN SEARCH REPORT ON EUROPEAN PATENT APPLICATION NO. EP 11 00 4590

This annex lists the patent family members relating to the patent documents cited in the above-mentioned European search report.
The members are as contained in the European Patent Office EDP file on
The European Patent Office is in no way liable for these particulars which are merely given for the purpose of information.

25-08-2011

| Patent document cited in search report | Publication date | Patent family member(s) | Publication date |
|---|---|---|---|
| WO 2010146052 A1 | 23-12-2010 | NONE | |
| EP 2289973 A1 | 02-03-2011 | CN 102015830 A | 13-04-2011 |
| | | WO 2009136631 A1 | 12-11-2009 |
| | | US 2011065021 A1 | 17-03-2011 |
| WO 2008005647 A2 | 10-01-2008 | US 2008004443 A1 | 03-01-2008 |
| WO 2005053060 A2 | 09-06-2005 | CA 2545375 A1 | 09-06-2005 |
| | | EP 1687377 A2 | 09-08-2006 |
| | | JP 2007515513 A | 14-06-2007 |
| | | KR 20060115886 A | 10-11-2006 |
| | | US 2007292730 A1 | 20-12-2007 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2005053060 A2
- EP 2289973 A1
- WO 2006094767 A1


### Non-patent literature cited in the description


- **HICKNER et al.** *Chem Rev.,* 2004, vol. 104, 4587
- **GHASSEMI ; MCGRATH ; ZAWODZINSKI.** *Polymer,* 2006, vol. 47, 4132-4239
- **A. ROY ; X. YU ; S.DUNN ; J.E. MCGRATH.** *J. Membrane Sci.,* 2009, vol. 327, 118-124
- **ELABD ; HICKNER.** *Macromolecules,* 2011, vol. 44, 1-11